Europäisches Patentamt

European Patent Office

Office européen des brevets

(11) Publication number: **0 421 279 A1**

(12) **EUROPEAN PATENT APPLICATION**

(21) Application number: 90118585.0

(22) Date of filing: 27.09.90

(51) Int. Cl.5: **A61B 8/14**, A61B 8/00,
G01N 29/22, G10K 11/18

(30) Priority: 29.09.89 JP 251869/89

(43) Date of publication of application:
10.04.91 Bulletin 91/15

(84) Designated Contracting States:
BE DE FR GB IT NL SE

(71) Applicant: TERUMO KABUSHIKI KAISHA
No. 44-1, Hatagaya 2-chome, Shibuya-ku
Tokyo 151(JP)

(72) Inventor: Ishikawa, Kou

c/o Terumo Kabushiki Kaisha, 1500 Inokuchi
Nakai-cho, Ashigarakami-gun
Kanagawa-ken(JP)
Inventor: Ishizuka, Yoshizo
c/o Terumo Kabushiki Kaisha, 1500 Inokuchi
Nakai-cho, Ashigarakami-gun
Kanagawa-ken(JP)

(74) Representative: Henkel, Feiler, Hänzel &
Partner
Möhlstrasse 37
W-8000 München 80(DE)

(54) Ultrasonic diagnostic apparatus with selective focussing patterns.

(57) An ultrasonic diagnostic apparatus transmits ultrasonic beams into the body of a subject under examination from an ultrasonic transducer array (16) and forms a tomographic image of the subject on the basis of ultrasonic echoes returned from the subject. The apparatus includes a focus pattern generating circuit (111, 112, 11ℓ, 121, 122, 12ℓ) for generating echo signals having various focus patterns, an A/D converter (131, 132, 13ℓ) for producing a plurality of image data having different focus patterns, an image data storage (141, 142, 14ℓ), a focus pattern selecting circuit (20, 30, 34) for comparing the plurality of image data thus produced with respect to a predetermined feature and selecting the image data associated with the most appropriate feature from the plurality of image data, and image forming circuitry (22, 24, 26, 36) for forming a tomographic image according to the selected image data.

FIG. 1

EP 0 421 279 A1

## ULTRASONIC DIAGNOSTIC APPARATUS WITH SELECTIVE FOCUSSING PATTERNS

### BACKGROUND OF THE INVENTION

#### Field of the Invention

The present invention relates to an ultrasonic diagnostic apparatus for receiving ultrasonic echoes returned from a subject under examination and analyzing the echo signals to obtain an image of the subject represented by the signals.

#### Description of the Prior Art

An ultrasonic diagnostic apparatus is adapted to transmit ultrasonic beams into part of the body of a subject under examination, such as a living body, from an array of ultrasonic transducers having a plurality of ultrasonic transducers arranged in a linear or arcuate form, and to receive echoes reflected from the internal portions of the subject body to process the echoes by means of a wave analysis, for example, and to develop an image represented by the echoes. The echoes are in the form of spherical waves having a center at a location from which the echoes are reflected. In the case of a transducer array having a plurality of transducers arranged in a linear form, the transducers located more inwardly located in the array receives echoes earlier. There has therefore been an electronic focusing method which improves resolution of a tomographic image by causing a signal which is received by the inwardly located transducers to reach later than the other signals to develop an echo image as if respective transducers have received echoes returned from the same spherical wave front. That spherical or arcuate waveform is hereinafter referred to as "a focus pattern" (FP). A shape of focus pattern changes according to change in the depth of the reflecting region of the examination subject.

In an ultrasonic diagnostic apparatus so structured as to obtain a single focus pattern associated with a transmitted signal in a single transmission cycle, an image will be focused only on a single depth with the result that the image becomes blurred in other depths. In the light of such a drawback, a dynamic focusing scheme has been proposed which is capable of changing a focus pattern so as to focus on any depth of the reflecting region from which a received signal is obtained in response to a transmitted signal in a single transmission cycle. In an ultrasonic diagnostic apparatus operative in accordance with the pulse-echo method, ultrasonic echoes are received from the transducer array gradually with the lapse of time T after transmitting ultrasonic pulses.

The prior art methods assume that an ultrasonic wave propagation rate (sound velocity) C is fixed at a constant rate, and therefore treat echoes detected at the point of the time T as if reflected from a depth TC/2. Taking a linear array type of probe as an example to explain time delays for focusing at a depth $\underline{d}$ , a difference in time delay between a transducer on the center of the array receiving echoes and a transducer in a distance $\underline{x}$ from that center is defined by an equation:
$(\sqrt{d^2 + x^2} - d)/C$.

In the conventional method, a dynamic focusing processing has been executed on the assumption that the sound velocity of ultrasonic waves is not changeable in the internal body of a subject under examination. In a real living body, however, the sound velocity varies depending on regions and conditions of the internal tissue. Therefore, a method of obtaining a spherical or arcuate focus pattern which has been established on the assumption that the sound velocity is equal, as stated above, could not perform a dynamic focusing always optimum to the tissue of the real examination subject.

### SUMMARY OF THE INVENTION

It is therefore an object of the present invention to provide an ultrasonic diagnostic apparatus having an excellent wave receiving directivity, in which ultrasonic waves are received in an optimum focus pattern at all times from a subject under examination, especially a living body, in which the internal sound velocity is different depending on regions, without any operator's help.

In accordance with the present invention, the ultrasonic diagnostic apparatus which transmits an ultrasonic beam into a body of a subject under examination from an ultrasonic probe having a plurality of ultrasonic transducers arranged in the form of an array and receives an ultrasonic echo from the subject to form a tomographic image of the subject on the basis of signals representative of the received echo comprises focus pattern generating means for causing a plurality of time delay patterns to act on the signals to generate a plurality of echo signals each having a different focus pattern of an ultrasonic echo, an analog-to-digital converter means for producing a plurality of image data each having a different focus pattern according to the plurality of the echo signals, storing means for storing the plurality of image data, focus pattern selecting means operative in response to said analog-to-digital converter means for comparing the plurality of image data produced with respect to a predetermined feature to select the image data, and image forming means for forming a tomographic image according to the selected image data.

Also, the ultrasonic diagnostic apparatus in accordnace with the present invention which transmits an ultrasonic beam into a body of a subject under examination from an ultrasonic probe having a plurality of ultrasonic transducers arranged in the form of an array and receives an ultrasonic echo from the subject to form a tomographic image of the subject on the basis of signals representative of the received echo comprises focus pattern generating means for causing a plurality of time delay patterns to act on the signals to generate a plurality of echo signals each having a different focus pattern of an ultrasonic echo, and analog-to-difital converter means for producing a plurality of image data each having a different focus pattern according to the plurality of echo signals, selecting and storing means operative in response to the plurality of image data produced for comparing the plurality of image data with respect to a predetermined feature to select the image data, and for storing an indication identifying a focus pattern for the selected image data, and image forming means for taking image data associated with the indication out of said analog-to-digital converter means to a region of interest in a tomographic image represented by the image data, and forming the tomographic image.

In accordance with the present invention, the ultrasonic diagnostic apparatus has the focus pattern generating means which causes a plurality of focus patterns to act upon echo signals produced in every scanning. The analog-to-digital converter means converts the echo signals into image data, and the focus pattern selecting means selects the most sharply focused image data among the plurality of image data associated with the plurality of focus patterns produced in a single cycle of scanning. The image forming means forms thereby a tomographic image. By scanning a segmental area including in the image, it is possible to obtain an image well-focused on all the areas of the image.

## BRIEF DESCRIPTION OF THE DRAWINGS

The objects and features of the present invention will become more apparent from the consideration of the following detailed description taken in conjunction with the accompanying drawings in which:

FIG. 1 is a functional block diagram schematically showing an preferred embodiment in accordance with the present inventio including memories associated with a plurality of focus patterns;

FIGS. 2A, 2B and 2C show different focus patterns applicable at verious sound velocities depending on the tissue constitutions of the body of a subject under examination;

FIG. 3 is a flowchart demonstrating arithmetic processing for obtaining an optimum focus in the illustrative embodiment shown in FIG. 1;

FIGS. 4A, 4B and 4C exemplify segmental areas to be established within an ultrasonic image;

FIG. 5 is a functional block diagram schematically illustrating an alternative embodiment provided with a single focus pattern selecting memory associated with a plurality of focus patterns;

FIG. 6 is a functional block diagram showing a focus pattern selecting circuit included in the illustrative embodiment shown in FIG. 5;

FIGS. 7A and 7B exemplify images having respective, divided areas where respective focus patterns are set;

FIG. 8 is a functional block diagram schematically showing an image combiner circuit included in the alternative illustrative embodiment;

FIG. 9A shows focus pattern numbers stored in a focus pattern selecting memory included in the alternative embodiment;

FIG. 9B exemplifies notations of image data represented by the focus patterns; and

FIG. 9C exemplifies a composite output image.

## DESCRIPTION OF THE PREFERRED EMBODIMENTS

With reference to the accompanying drawings, embodiments of an ultrasonic diagnostic apparatus in accordance with the present invention will be described in detail hereunder.

An ultrasonic diagnostic apparatus embodying the present invention scans inside the body of a subject under examination with ultrasonic beams, causes a plurality of focus patterns to act upon echo signals returned in response to the beams from the body, and selects the best focused echo signals to develop a tomographic image of the examination subject body.

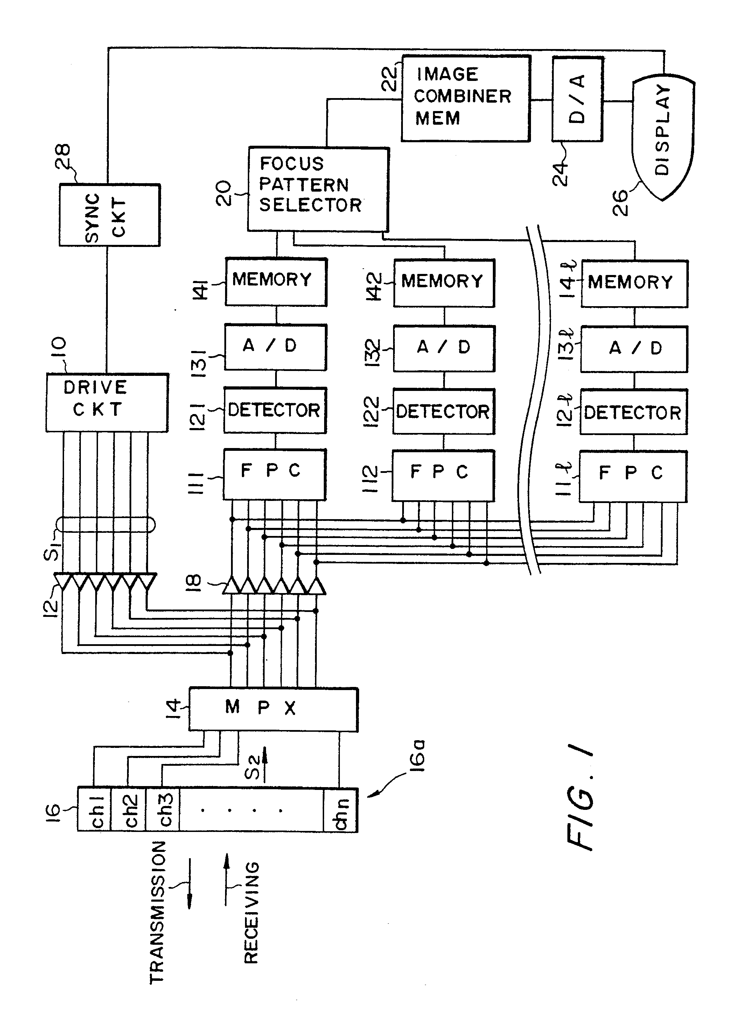

FIG. 1 is a functional block diagram showing an illustrative embodiment of an ultrasonic diagnostic apparatus in accordance with the present invention. The apparatus of the illustrative embodiment comprises an ultrasonic probe 16a which operates as a B mode linear oscillator array, and consists of a plurality of ultrasonic transducers in channels ch1 through chn arranged in a linear form. The apparatus is provided with a drive circuit 10 for driving the ultrasonic probe 16a. The drive circuit 10 generates a drive signal S1 which is then fed to a multiplexer 14 via drivers 12. The drive circuit 10 and the drivers 12 are provided to correspond to the number of transducers 16 of the transducer array 16a which are to be simultaneously driven in a single cycle of transmission.

The multiplexer 14 carries out electronic scanning by selectively adding the drive signal S1 to a specific series of the trasnducers 16 of the channels ch1 to chn to shift the driving in order across the entire array 16a. The trasnducers 16 are an electro-acoustic transducer which transmits, when driven, ultrasonic beams to thereby scan inside the body of the examination subject and receives ultrasonic echoes returned from the internal regions of the examination subject to generate echo signals S2.

The echo signals S2 are fed through the multiplexer 14 and a receiver 18 to a plurality ($\ell$) of focus pattern generating circuits (FPC) 111, 112 to 11$\ell$. The focus pattern generating circuits 111, 112 to 11$\ell$ are delay circuits which give delay in accordance with a desired focus pattern (FP) to echo signals received by a series of the transducers 16 which are simultaneously driven in a single cycle of transmission from one of the channels ch1 to chn of the transducer array 16a. Those focus patterns are set to differ from each other among the number of the focus pattern generating circuits 111, 112 to 11$\ell$. The focus pattern generating circuits 111, 112 to 11$\ell$ cause respective delay patterns to act upon echo signals to allow the focus patterns of ultrasonic echoes to respectively generate mutually different echo signals.

Those echo signals are fed to and detected by a detecting circuits 121, 122 to 12$\ell$. The detected echo signals are fed to analog-to-digital (A/D) converters 131, 132 to 13$\ell$, respectively, and then converted into corresponding image data in the form of digital signals. The image data are in turn stored in memories 141, 142 to 14$\ell$ associated therewith in the form of a first line of data in a tomographic image.

The multiplexer 14 carries out scanning by moving the driving of a group of channels of the transducers 16 in order. Stored in the memories 141, 142 to 14$\ell$ are image data of kinds of focus patterns every time of receiving echo signals. When scanning of a single frame has been accomplished, the corresponding kinds ($\ell$) of image data are established in the memories 141, 142 to 14$\ell$ over the whole regions of the image.

Outputs on which data are read out of the memories 141 to 14$\ell$ are interconnected to a focus pattern selecting circuit 20 as shown in FIG. 1. The selecting circuit 20 reads pieces ($\ell$) of image data in respect of each region of interest on a tomographic image out of the memories 141 to 14$\ell$ to select the best focused one of the images which are to be processed, and then delivers data representing the selected image to a combiner memory 22. The focus pattern selecting circuit 20 reads data of all the regions of interest out of the memories. The image data stored in the combiner memory 22 are converted into associated analog signals by the digital-to-analog (D/A) converter 24, and then developed on a display 26 in the form of a visible image. Synchronization of scanning of the examination subject body with display of the resultant tomographic image is effected in a synchronizing circuit 28, which causes an input into the display 26 to be synchronous with the drive signals S1 of the drive circuit 10.

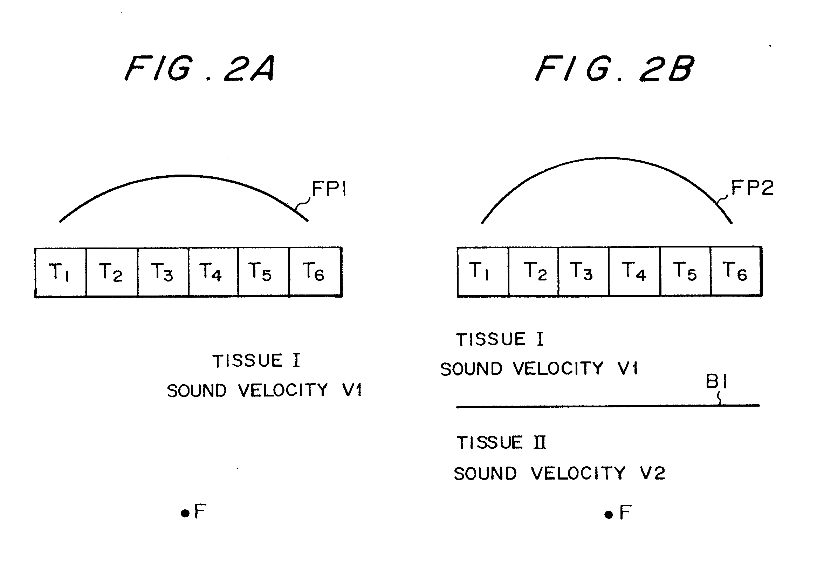

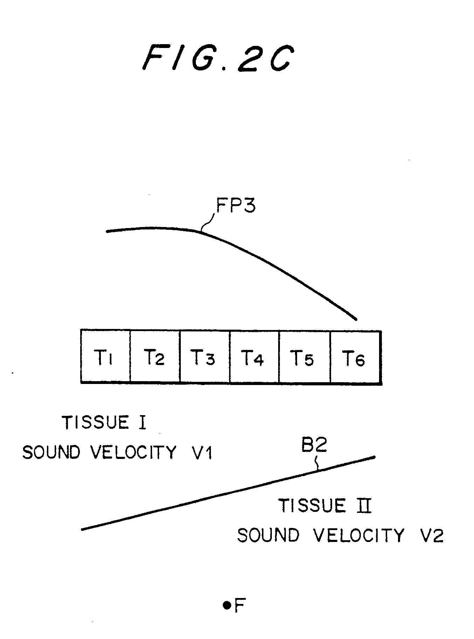

Subsequently, a delay pattern setting method in focus pattern circuits 111 to 11$\ell$ will be described hereunder, making reference to FIGS. 2A, 2B and 2C. for simplification, considering that a transducer array is made up of six transducers T1 to T6 instead of the transducers 16, respective transducers T1 to T6 are to be simultaneously driven without focusing at the time of transmission. Disregarding refraction of ultrasonic waves due to change in acoustic impedance, waves transmitted from the transducers T1 to T6 are to be regarded as spherical waves and the directivity in the transducers T1 through T6 is not to be taken into an account.

Referring to FIG. 2A, the transducers T1 through T6 are linearly arranged and focus an echo signal reflected from a point F. In addition, assuming that sound velocity V1 in the tissue of a living body is all constant, a highly accurate focus can be obtained when delay is affected on an arcuate focus pattern FP1 so that the transducers T1 to T6 may be focussed on the point F. As shown in FIG. 2B, in the case that a boundary B1 between a tissue I and a tissue II is distributed substantially in perpendicular to ultrasonic beams transmitted from the transducers T1 to T6, it is possible to be focussed on the point F unless a focus pattern FP2 has an arcuate form with a curvature smaller than that of the delay pattern FP1 shown in FIG. 2A. In the models shown in those figures, the sound velocities V1 and V2 are supposed to be constant within the tissues I and II, respectively, with the relation V1>V2 being kept.

As shown in FIG. 2C, in the case that a boundary B2 between tissues I and II is aslant to the ultrasonic beams transmitted from the transducers T1 through T6, a considerably deformed delay focus pattern FP3 is needed in order for the beams to be focused on the point F. In that instance, the relation between V1 and V2 is kept V1>V2.

As described above, even in the case of focusing on a certain point, it is evident that for forming an ultrasonic tomographic image with higher accuracy it is better to use the method of appropriately selecting a focus pattern optimum to that point among the plurality of focus patterns prepared beforehand than the method of establishing a focus pattern in such a manner that the pattern simply depends only on the depth of a living body under examination.

Next, a method of selecting the most suitable pattern among a plurality of focus patterns will be exemplified hereunder. In general, when comparison is made between image data which have been under focus and image data which have not been under focus, the focused one has larger difference in luminance dependent upon brightness and darkness than the unfocused one, and distinctly develops the edge of a graphic pattern, etc. When such a feature is expressed with a luminance variance in an image, the greater the variance of the luminance is, the better an image is to be focused. In addition to the variance of the luminance, there are other parameters for evaluating the degree of focusing an image, such as a difference between the maximum and minimum values of echo signals, or a spatial frequency component, etc.

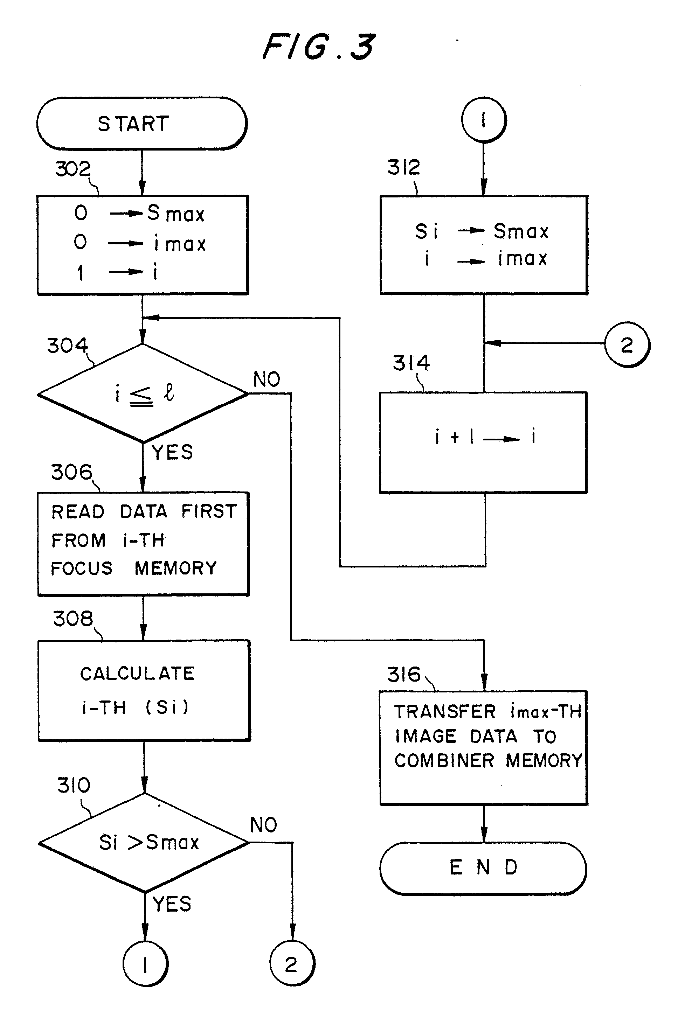

FIG. 3 is a flowchart demonstrating a procedure for a focus pattern selecting process using the above-mentioned parameters in the focus pattern selecting circuit 20. In the figure, indication i is representative of a number for a focus pattern FP and takes any of effective numbers from 1 to $l$. Firstly, the maximum value Smax for luminance variance, a focus patteen number imax associated with Smax, and the number of processing cycles i are initialized (step 302), and number $l$ is compared with i (step 304). When the number of the processing cycles i does not exceed $l$, image data associated with a specific depth k are read out of an image memory 14i consituted by the i-th focus pattern (step 306) to calculate a dispersion Si for the readout image data (step 308). Then, the variance Si is compared with Smax (step 310). When Si is larger than Smax, the value for Si and the value for i are assigned to Smax and imax, respectively, (step 312) to increment the value for i (step 314). When Si is not larger than Smax, the procedure proceeds from the step 310 to the step 314 via a connection notification 1, and then returns from the step 314 to the step 304 where comparison is made again between $l$ and i . When i exceeds $l$ in the step 304, the readout image data constituted by the imax-th focus pattern is transferred to a combiner image memory 22 (step 316) to complete a single cycle of transmission and receiving.

A series of the processes described above is applied on all the areas of an image while moving across a location k on the image area to be read, thereby data represeenting an image focused on all the areas thereof is stored in the combiner image memory 22.

While the illustrative embodiment described above uses variance as a parameter for selecting focus patterns, a parameter is not to be limited to the variance. For example, other parameters derived from conversion of a degree of variance in luminance distribution into a numerical value, such as the grand total of absolute values for difference between values for brightness and mean values for brightness, difference between the maximum and minimum values for brightness distribution, etc., may be used. With these parameters a trend similar to that in the case of using variance may be obtained.

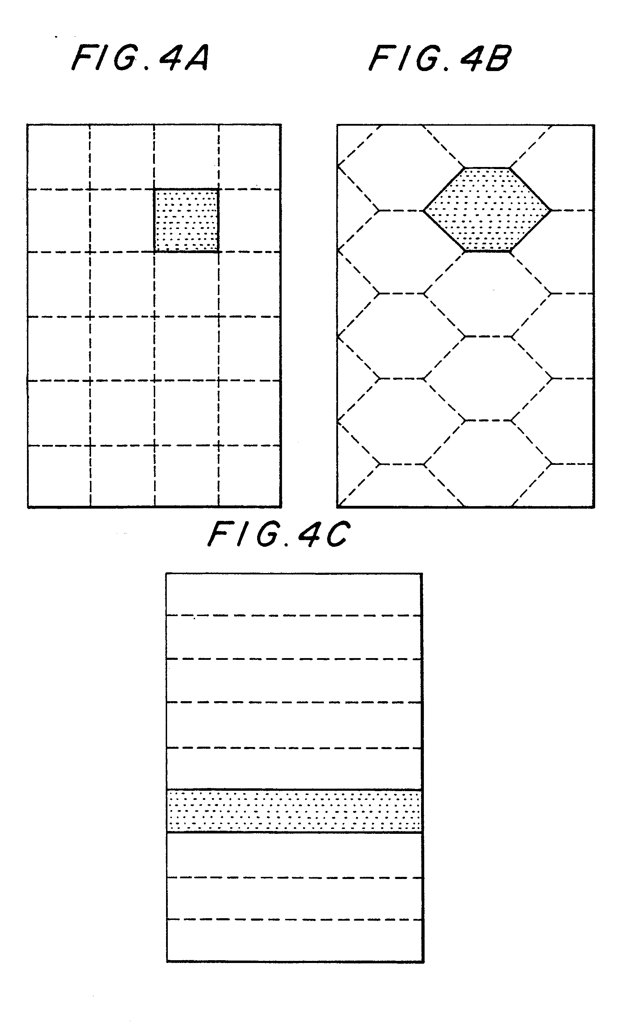

In the step 306 described above, the size and shape of an image data area to be read is determined depending on the shapes and the number of focus patterns. For example, a square pixel area in the size of 5 x 5 or 7 x 7 as shown in FIG. 4A, a hexagonal pixel area as shown in FIG. 4B, and image data in the same depth of an examination subject body as shown in FIG. 4C are used.

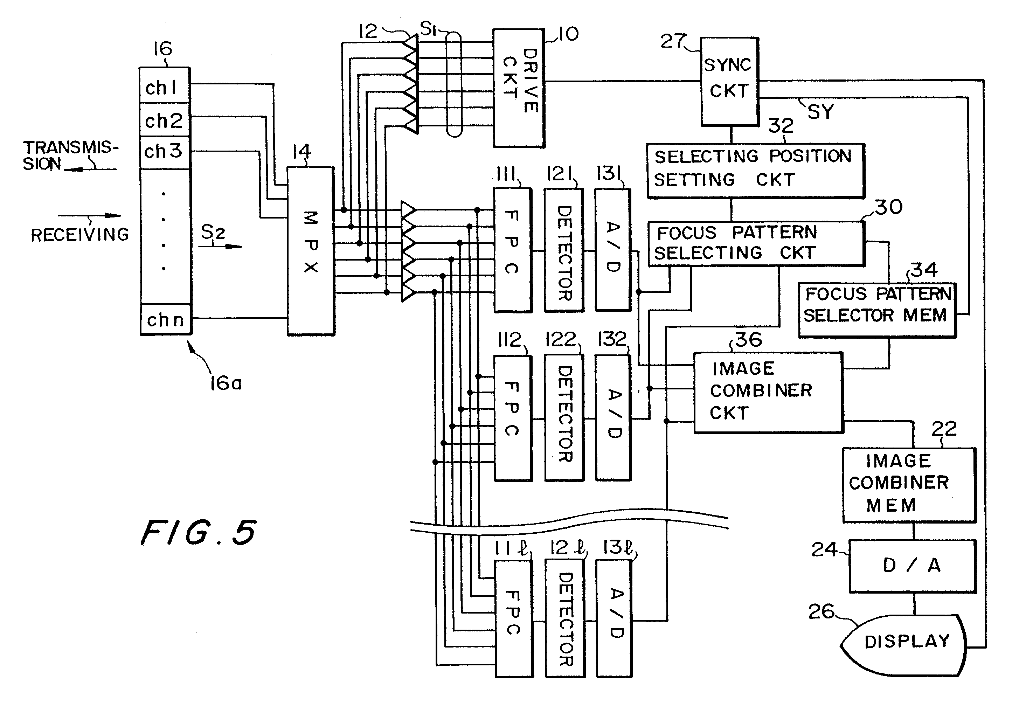

In the illustrative embodiment shown in FIG. 1, ( $l$ + 1) units of image memories including a combiner image memory 22 for storing kinds of focus patterns are required. However, by omitting those memories it is possible to miniaturize the apparatus as well as reduce time required for processing. FIG. 5 is a block diagram showing an alternative embodiment of the present invention where $l$ units of image memories have been removed. In the figure, components having the same reference numerals as those shown in FIG. 1 enjoy the similar $l$ functions. The drive signals S1 delivered from the drive circuit 10 to the transducers 16 are transduced into ultrasonic waves, which will in turn be transmitted into a living body. The ultrasonic waves reflected from the living body return to the transducers 16 and are converted into received signals S2. The received signals S2 are delivered to $l$ units of the focus pattern circuits 111, 112 to 11$l$ where the receiving signals S2 are added with focus patterns in the respective circuits and converted into image signals. The image signals are then despatched from the A/D converters 131, 132 to 13$l$ via the detector circuits 121, 122 to 12$l$.

On the other hand, a focus pattern selecting circuit 30, on the basis of information on a focus pattern selecting position sent from a selecting position setting circuit 32, reads out of $l$ pieces of image data each having a different focus pattern $l$ pieces of image data associated with each of the segmental areas divided into the forms exemplified in FIG. 4A, FIG. 4B, or FIG. 4C to select among the readout image data a numerical figure representative of the best focust pattern as the most suitable focus pattern number. The thus selected, most suitable focus pattern number is written in an address associated with a focus pattern selecting position in a focus pattern selecting memory 34 and the related image data are stored in a data area associated with the address of that number. The contents stored in the focus pattern selecting memory 34 are read out in synchronization with a probe drive signal SY, independently of the writing operation described above. Specifically, every cycle of transmitted and received waves the read address of the focus pattern selecting memory 34 increases with the lapse of time and focus pattern numbers most suitable to each focus selecting position are set out in turn.

An image combiner circuit 36, in response to an output from the focus pattern selecting memory 34, selects data of the associated area and stores the data in the image combiner memory 22. The image data stored in the image combiner memory 22 are converted into analog signals in the D/A converter 24 and delivered to a display 26 to be displayed in the form of a visible image. The circuits 26, 32, and 34 are timed with a synchronizing circuit 28.

In this method, with a single cycle of scanning by the ultrasonic transducer array 16a a focus pattern for a single area of a tomographic image is selected. An area for which a focus pattern is selected ranges from a fraction of several numbers of a frame of an image to a fraction of several tens thereof. Therefore, selection of focus patterns for the entire frame of an image requires time for several-ten cycles of scanning. As a result, there occurs time delay for several-ten cycles of scanning at the maximum between image data for which focus patterns are selected and image data which are read out for reconstitution by the selected focus patterns. However, generally in the case of an ultrasonic diagnostic apparatus with real time display, scanning is performed several-ten cycles per second with the result that the time delay is about a second at the maximum. Consequently, the time delay stated above will be little worth consideration.

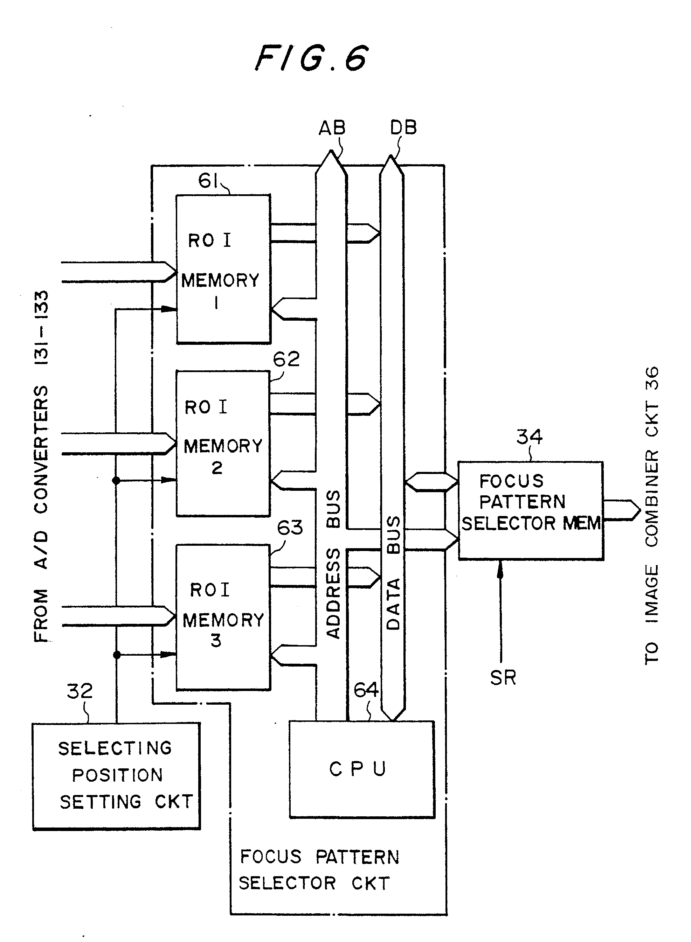

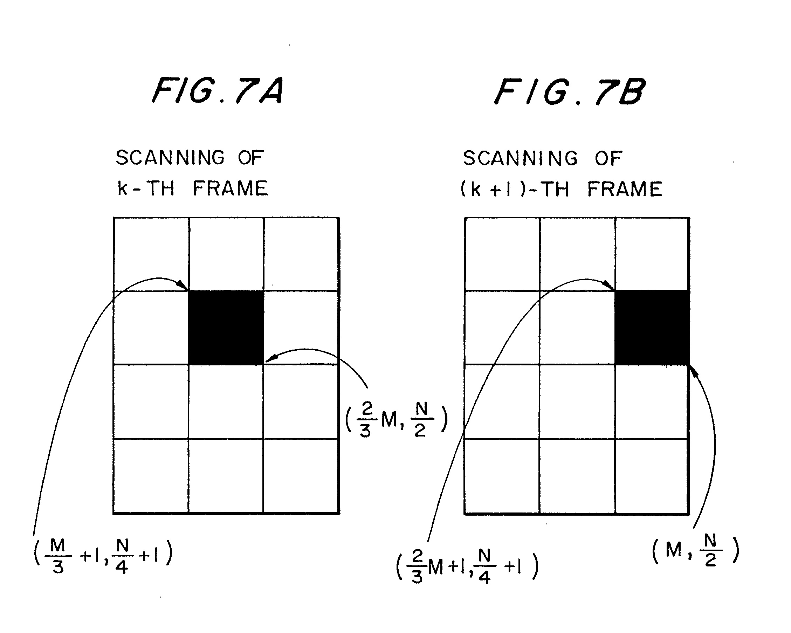

Subsequently, a series of operations of the focus pattern selecting circuit 30, selecting position setting circuit 32, focus pattern selecting memory 34, and image combiner circuit 36 will be further described in detail. FIG. 6 is a block diagram showing a configuration of the focus pattern selecting circuit 30. The focus pattern selecting circuit 30 in the illustrative embodiment of the present invention has an image area divided into twelve blocks as shown in FIGS. 7A and 7B so as to obtain a function for setting an image with focus patterns most suitable to respective blocks. For simplification, the number of focus patterns is limited to three kinds, while a frame of image is to be divided into four areas in a vertical direction and three areas in a horizontal direction. Selection of focus patterns is effected by the focus pattern selecting circuit 30. Specifically, a data area to be read out at a time in order to select a focus pattern for an image composed of a vertical N pixels multiplied by a horizontal M pixels comes to be pixels in the size of N/4 in the vertical direction and M/3 in the horizontal direction. The number of horizontal scanning lines of ultrasonic waves is to be M lines.

In the case of scanning the k-th frame in FIG. 7A, in a region (a region of interest) for which the optimum focus pattern should be determined, specifically in a region between the scanning line No. (M/3 + 1) and No. 2M/3 and between the pixel position No. (N/4 + 1) and No. N/2 in a direction toward the depth, the selecting position setting circuit 32 causes a CPU 64 of the focus pattern selecting circuit 30 to store digital signals for focus patterns #1 to #3 in ROI memories 61 to 63. The CPU 64 operates data stored in the ROI memories 61 to 63 to obtain respective values for variance. Out of the three values obtained, one representative of a focus pattern number having the largest variance, i.e. the optimum focus pattern number, is stored in the focus pattern selecting memory 34 from an address bus AD and a data bus DB. The position where the optimum focus pattern number is stored is to be an area (2, 2) associated with a position set by the selecting position setting circuit 32.

In the case of scanning the next (k + 1)-th frame, as shown in FIG. 7B, a region of interest which is set by the selecting position setting circuit 32 is a region between the scanning lines No. (2M/3 + 1) and No. M and between the pixel position No. (N/4 + 1) and No. N/2 in the direction toward the depth, and the same operations as those described in the case of scanning the k-th frame are effected. Then, the resultant optimum focus pattern number is stored in an area (2, 3) of the focus pattern selecting memory 34. The focus pattern number stored in the focus pattern selecting memory 34 is synchronized with a read timing signal SR and sent out to the image composite circuit 36.

Since a region of interest moves every time of scanning as described so far, repetitive execution of the processes mentioned above determines the optimum focus patterns for all the areas on an image. The contents of areas for which focus patterns are selected are updated every 12 frames in this example. Specifically, optimum pattern numbers are selected on real time.

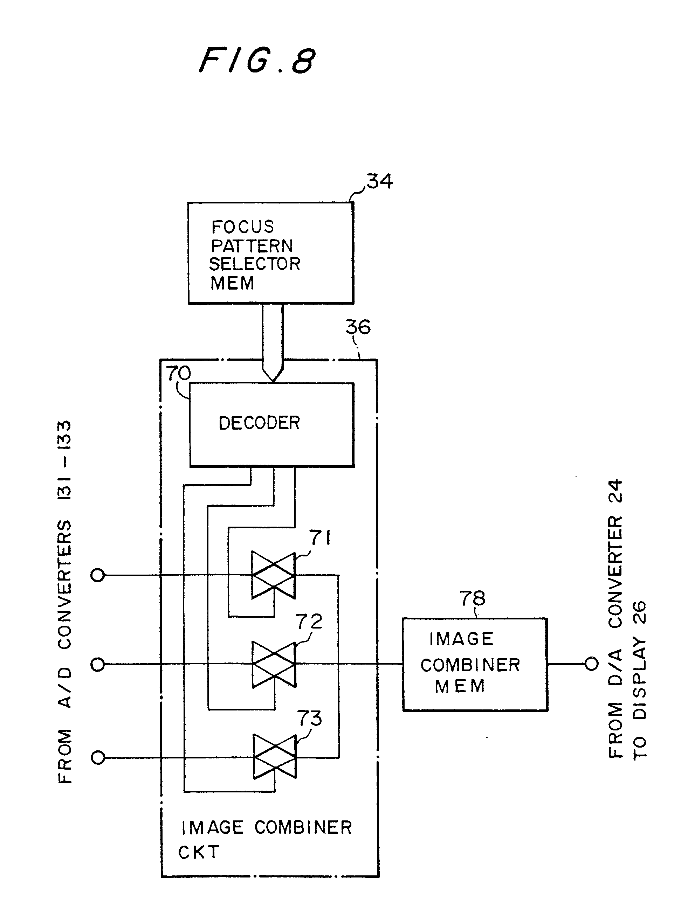

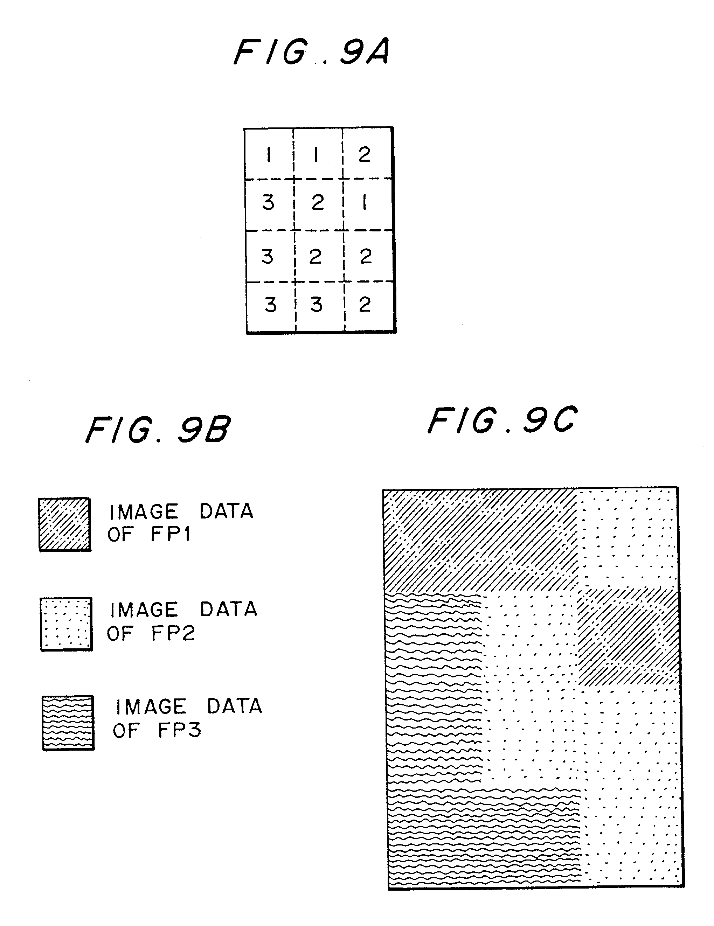

FIG. 8 shows a configuration of the image combiner circuit 36. In the focus pattern selecting memory 34 in accordance with the illustrative embodiment there are stored focus patterns #1, #2 and #3 optimum to respective blocks of an image as shown in FIG. 9A. A decoder 70, when receiving the optimum focus patterns #1, #2 and #3 therein from the focus pattern selecting memory 34, turns switches 71, 72 and 73 associated with these focus pattern numbers on. The switches 71, 72 and 73 turned on respectively read out of the A/D converter a single piece of image data associated with the respective focus pattern numbers in an image combiner memory 78. The image combiner memory 78 delivers the image data in the sequence of FIFO operations to the D/A converter 24 where the image data are converted into corresponding digital data. The display 26 displays an output image composed of the image data represented by focus patterns FP1 to FP3. The input image is exemplified in FIG. 9C. Notations of the image data illustrated in FIG. 9C are shown in FIG. 9B.

While the description has been made so far for the instances that a single cycle of the focus pattern selection process is effected in each period of scanning by the transducer array 16a, the number of processing cycles is not to be limited to single. To increase the number of processing cycles within a range that the length of time required for focus pattern selection comes within the length of time required for a single cycle of scanning can be more effective to reduce time difference between an image for which focus patterns are selected and an image to be displayed. As a result, more sharply focused image can be obtained on real time.

Further, while in the illustrative embodiments described above, respective regions of interest do not include a common area of image, a finish line may be set so that an area of image may partially overlap between regions of interest, in other words, so that regions of interest may possess a common area of image. If so set, rapid and violent change in focusing can be prevented from occurring in an image and as a result, it becomes possible to provide smooth change in focusing.

As described so far, in accordance with the present invention the ultrasonic diagnostic apparatus is capable of optimizing focus upon receiving on a real time basis. While the illustrative embodiments described above use a B mode linear array of ultrasonic transducers, the present invention is not to be limited to that type of operational mode. It is obvious that the present invention is also effectively applicable to a device using other types of transducer arrays, such as a sector type of array, a convex type of array, etc., and an A mode ultrasonic diagnostic apparatus.

Further, in accordance with the present invention, the ultrasonic diagnostic apparatus is structured so as to select a focus pattern having the optimum focus among a plurality of focus patterns in each region of a tomographic image. Consequently, an ultrasonic image focused to the optimum degree can be formed in conformity with the real sound velocity in the body of a subject under examination.

The illustrative embodiments described above are so designed that one scanning accomplished by an array of ultrasonic transducers leads to focus selection on a single area of image. The focus selection processing is not necessarily completed within a period of single ultrasonic scanning in dependent upon the requirements coming from the processing rate inherent to the processor circuitry, such as a CPU, which is adapted to perform the processing. That follows a serious difficulty in an application which is operative in a higher frequency (e.g. 10 MHz) of ultrasonic beams. Because, such a higher frequency of ultrasonic beams attenuates more sharply in a living body, thus resulting in a shorter depth of the diagnostic capability in the living body so as to allow the period in which a frame of image of the body can be captured to be limited to a certain extent. However, when the operator wishes to observe an image of the living body under examination more precisely, he or she is likely to hold the ultrasonic probe as firmly as possible, giving rise to the same tomographic image of the body repetitively visualized on the display screen over a number of frame periods. In practice, it is therefore sufficient to design a system capable of focus selection processing on a single area in the period of plurality of ultrasonic scannings accomplished by the ultrasonic transducer array rather than one scanning performed with respect to focus section on a single area of image.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. An ultrasonic diagnostic apparatus for transmitting an ultrasonic beam to a body of a subject under examination from an ultrasonic probe having a plurality of ultrasonic transducers arranged in the form of an array and receiving an ultrasonic echo from the subject to form a tomographic image of the subject on the basis of signals representative of the received echo, CHARACTERIZED BY focus pattern generating means (111, 112, 11ℓ, 121, 122, 12ℓ) for causing a plurality of time delay patterns to act upon the signals to generate a plurality of echo signals each having a different focus pattern of an ultrasonic echo;

analog-to-digital converter means (131, 132, 13ℓ) for producing a plurality of image data each having a different focus pattern according to the plurality of echo signals;

storing means (141, 142, 14ℓ) for storing the plurality of image data;

focus pattern selecting means (20, 30, 34) operative in response to said analog-to-digital converter means (131, 132, 13ℓ) for comparing the plurality of image data produced with respect to a predetermined feature to select the image data; and

image forming means (22, 24, 26, 36) for forming a tomographic image according to the selected image data.

2. An apparatus in accordance with claim 1, CHARACTERIZED IN THAT said focus pattern selecting means (111, 112, 11ℓ, 121, 122, 12ℓ) compares the plurality of image data with respect to the predetermined feature in a segmental area of the tomographic image.

3. An apparatus in accordance with claim 1, CHARACTERIZED IN THAT said predetermined feature comprises at least any one of a variance, a difference between a maximum value and a minimum value, and a spatial frequency component of the echo signals, to thereby determine whether or not focus on the image data is acceptable.

4. An ultrasonic diagnostic apparatus for transmitting an ultrasonic beam into a body of a suject under examination from an ultrasonic probe having a plurality of ultrasonic transducers arranged in the form of an array and receives an ultrasonic echo from the subject on the basis of signals representative of the received echo,

CHARACTERIZED BY

focus pattern generating means (20, 30, 34) for causing a plurality of time delay patterns to act upon the signals to generate a plurality of echo signals each having a different focus pattern of an ultrasonic echo;

analog-to-digital converter means (131, 132, 13ℓ) for producing a plurality of image data each having a different focus pattern according to the plurality of echo signals;

selecting and storing means (30, 34) operative in response to said analog-to-digital converter means (131, 132, 13ℓ) for comparing the plurality of image data produced with respect to a predetermined feature to select the image data, and for storing an indication identifying a focus pattern for the selected image data; and

image forming means (22, 24, 26, 36) for taking image data associated with the indication out of said analog-to-digital converter means (131, 132, 13ℓ) to a region of interest in a tomographic image represented by the image data, and forming the tomographic image.

5. An apparatus in accordance with claim 4, CHARACTERIZED IN THAT said selecting and storing means (30, 34) compares the plurality of image data with respect to the predetermined feature in a segmental area of the tomographic image.

6. An apparatus in accordance with claim 4, CHARACTERIZED IN THAT said predetermined feature comprises at least any one of a variance, a difference between a maximum value and a minimum value, and a spatial frequency component of the echo signals, to thereby determine whether or not focus on the image data is acceptable.

FIG. 1

# FIG. 2A

TISSUE I

SOUND VELOCITY V1

● F

# FIG. 2B

TISSUE I

SOUND VELOCITY V1

TISSUE II

SOUND VELOCITY V2

● F

EP 0 421 279 A1

# FIG. 2C

FP3

| T1 | T2 | T3 | T4 | T5 | T6 |

TISSUE I
SOUND VELOCITY V1

B2

TISSUE II
SOUND VELOCITY V2

•F

# FIG.3

```
                    START
                      │
         302 ┐        ▼
      ┌──────────────────┐
      │   0  ──→ S max   │
      │   0  ──→ i max   │
      │   1  ──→ i       │
      └──────────────────┘
                      │
                      ▼
         304 ┐      ╱╲
            ╱            ╲      NO
          ╱   i ≦ ℓ       ╲ ─────────────┐
            ╲            ╱                │
              ╲        ╱                  │
                 ╲  ╱                     │
                YES │                     │
         306 ┐      ▼                     │
      ┌──────────────────┐                │
      │ READ DATA FIRST  │                │
      │ FROM i-TH        │                │
      │ FOCUS  MEMORY    │                │
      └──────────────────┘                │
         308 ┐      │                     │
              ▼                           │
      ┌──────────────────┐                │
      │   CALCULATE      │                │
      │   i-TH  (Si)     │                │
      └──────────────────┘                │
         310 ┐      │                     │
            ╱╲                            │
          ╱      ╲      NO                │
        ╱ Si >Smax ╲ ─────────┐          │
          ╲      ╱             │          │
            ╲  ╱               │          │
           YES │               │          │
                ▼              ▼          │
             ( I )          ( 2 )         │
```

```
                    ( I )
                      │
         312 ┐        ▼
      ┌──────────────────┐
      │   Si ──→ Smax    │
      │   i  ──→ imax    │
      └──────────────────┘
                      │
                      ▼ ◄──────── ( 2 )
         314 ┐
      ┌──────────────────┐
      │   i + l ──→ i    │
      └──────────────────┘
                      │
                      ▼
         316 ┐
      ┌──────────────────┐
      │ TRANSFER imax-TH │
      │ IMAGE DATA TO    │
      │ COMBINER MEMORY  │
      └──────────────────┘
                      │
                      ▼
                  E N D
```

# FIG.4A

# FIG.4B

# FIG.4C

FIG.5

EP 0 421 279 A1

# FIG.6

FIG. 7B

SCANNING OF (k+1)-TH FRAME

$(M, \frac{N}{2})$

$(\frac{2}{3}M+1, \frac{N}{4}+1)$

FIG. 7A

SCANNING OF k-TH FRAME

$(\frac{2}{3}M, \frac{N}{2})$

$(\frac{M}{3}+1, \frac{N}{4}+1)$

## FIG.8

FROM A/D CONVERTERS 131 – 133

34 — FOCUS PATTERN SELECTOR MEM

36

70 — DECODER

71

72

73

IMAGE COMBINER CKT

78 — IMAGE COMBINER MEM

FROM D/A CONVERTER 24 TO DISPLAY 26

# FIG.9A

| 1 | 1 | 2 |
|---|---|---|
| 3 | 2 | 1 |
| 3 | 2 | 2 |
| 3 | 3 | 2 |

# FIG.9B

IMAGE DATA OF FP1

IMAGE DATA OF FP2

IMAGE DATA OF FP3

# FIG.9C

| | DOCUMENTS CONSIDERED TO BE RELEVANT | | | EP 90118585.0 |
|---|---|---|---|---|
| Category | Citation of document with indication, where appropriate, of relevant passages | | Relevant to claim | CLASSIFICATION OF THE APPLICATION (Int. Cl.5) |
| A | AU - B1 - 18 401/76 (COMMONWEALTH)<br>   * Page 5, line 19 - page 7a, line 22; fig. 4 *<br>-- | | 1,4 | A 61 B  8/14<br>A 61 B  8/00<br>G 01 N 29/22<br>G 10 K 11/18 |
| A | AU - B1 - 17 559/76 (THE COMMONWEALTH)<br>   * Page 5, line 23 - page 8, line 20; fig. *<br>-- | | 1,4 | |
| A | EP - A2 - 0 104 928 (TECHNICARE)<br>   * Abstract; claims 1-3; fig. 1-3 *<br>-- | | 1,4 | |
| A | EP - A1 - 0 102 179 (TECHNICARE)<br>   * Abstract; page 1, line 19 - page 3, line 8 *<br>-- | | 1,4 | |
| A | EP - A2 - 0 087 318 (TOKYO)<br>   * Abstract; fig. 4,5 *<br>-- | | 1,4 | TECHNICAL FIELDS SEARCHED (Int. Cl.5) |
| A | EP - A2 - 0 035 387 (TOKYO)<br>   * Abstract; page 1, line 1 - page 2, line 25; page 6, line 27; fig. 5,6 *<br>-- | | 1,4 | A 61 B<br>G 01 N<br>G 10 K |
| A | US - A - 4 423 737 (YANO)<br>   * Abstract; column 1, lines 33-62; fig. 1A *<br>-- | | 1,4 | |
| A | US - A - 4 242 912 (BURCKHARDT)<br>   * Abstract; column 1, line 61 - column 2, line 28 *<br>---- | | 1,4 | |

The present search report has been drawn up for all claims

| Place of search | Date of completion of the search | Examiner |
|---|---|---|
| VIENNA | 25-01-1991 | NEGWER |